# EUROPÄISCHE PATENTSCHRIFT

(11) **EP 3 166 840 B1**
(45) Veröffentlichungstag und Bekanntmachung des Hinweises auf die Patenterteilung: **19.09.2018**
(21) Anmeldenummer: 15732541.6
(22) Anmeldetag: 02.07.2015
(51) Int. Cl.: B62D 21/15, H02J 7/02, B62D 21/11, B60L 11/18, H02J 7/00

(54) **HILFSRAHMEN FÜR EIN KRAFTFAHRZEUG**
SUBFRAME FOR A MOTOR VEHICLE
CHÂSSIS AUXILIAIRE POUR UN VÉHICULE AUTOMOBILE

(30) Priorität: 11.07.2014 DE 102014010287
(43) Veröffentlichungstag der Anmeldung: 17.05.2017
(73) Patentinhaber: Audi AG, 85045 Ingolstadt (DE)
(72) Erfinder: ISAKIEWITSCH, Christian, 85051 Ingolstadt (DE)
(74) Vertreter: Reichert, Thomas Klaus
(86) Internationale Anmeldenummer: PCT/EP2015/001345
(87) Internationale Veröffentlichungsnummer: WO 2016/005039

(56) Entgegenhaltungen:
- WO-A1-2012/157333
- DE-A1- 4 011 962
- DE-A1-102009 029 883
- DE-A1-102012 023 363
- FR-A1- 2 968 605
- JP-A- 2012 257 443

## Beschreibung

Die vorliegende Erfindung betrifft einen Hilfsrahmen eines Vorder- oder Hinterwagens eines Kraftfahrzeugs mit zwei Längsträgern, die in Fahrzeugquerrichtung voneinander beabstandet und über wenigstens einen Querträger miteinander verbunden sind, wobei der Hilfsrahmen eine Versteifungsstruktur zur Erhöhung der Torsionssteifigkeit aufweist, in die ein Lademodul zur kontaktlosen Energieübertragung integriert ist.

Derartige Hilfsrahmen dienen im Kraftfahrzeugbau der Befestigung der aufbauseitigen Anlenkpunkte einer Radaufhängung. Zumeist am Hilfsrahmen des Vorderwagens können zusätzlich auch eine Kraftmaschine, ein Getriebe und/oder eine Lenkung befestigt sein. Der Hilfsrahmen selbst wird in der Regel elastisch mittels Gummilagern an die Karosserie angebunden. Die Versteifungsstruktur kann wahlweise als schubsteife Platte oder als, vorzugsweise kreuzartiger, Strebenverbund ausgebildet sein. Durch die schubsteife Platte kann lediglich die Steifigkeit des Hilfsrahmens erhöht werden, während der Strebenverbund zusätzlich noch in der Lage ist Kräfte aufzunehmen.

Die gattungsbildende DE 10 2012 023 363 A1 beschreibt einen Hilfsrahmen eines Vorder- oder Hinterwagens eines Kraftfahrzeugs mit zwei Längsträgern, die in Fahrzeugquerrichtung voneinander beabstandet und über wenigstens einen Querträger miteinander verbunden sind, wobei der Hilfsrahmen eine Versteifungsstruktur zur Erhöhung der Torsionssteifigkeit aufweist und wobei ein Lademodul zur kontaktlosen Energieübertragung in die Versteifungsstruktur integrierbar ist. Das Lademodul hat ein Abschirmblech und eine Spuleneinheit, wobei zwischen Abschirmblech und Spuleneinheit ein Entkopplungselement angeordnet ist (interne Entkopplung).

Nachteilig ist, dass das Entkopplungselement zwischen Abschirmblech und Spuleneinheit sehr großflächig ausgebildet sein muss, um einerseits die wirksame Entkopplung der Spuleneinheit sicherzustellen und andererseits deren Gewicht zuverlässig zu halten. Dies stellt relativ hohe Herausforderungen an die Herstellbarkeit.

Aufgabe der vorliegenden Erfindung ist es daher einen Hilfsrahmen für ein Kraftfahrzeug bereitzustellen, der einfacher herzustellen ist.

Diese Aufgabe wird durch die Merkmale des Patentanspruchs 1 gelöst.

Ein Hilfsrahmen eines Vorder- oder Hinterwagens eines Kraftfahrzeugs hat zwei Längsträger, die in Fahrzeugquerrichtung voneinander beabstandet und über wenigstens einen Querträger miteinander verbunden sind, wobei der Hilfsrahmen eine Versteifungsstruktur zur Erhöhung der Torsionssteifigkeit aufweist, in die ein Lademodul zur kontaktlosen Energieübertragung integriert ist und wobei das Lademodul mit der Versteifungsstruktur ausschließlich über Entkopplungslager verbunden ist.

Indem das Lademodul ausschließlich über Entkopplungslager mit der Versteifungsstruktur verbunden ist, kann das Lademodul vergleichsweise einfach aufgebaut werden und wird durch die Entkopplungslager dennoch wirksam von den Verwindungen der Versteifungsstruktur entkoppelt. Das Lademodul ist als fahrzeugseitiger Teil eines Systems zur kontaktlosen Energieübertragung zu verstehen, wie es exemplarisch in den Druckschriften DE 10 2010 042 395 A1 und EP 0 253 345 B1 gezeigt ist. Dabei wird die elektrische Energie (induktiv) von einem vorzugsweise stationär angeordneten Transmitter auf das fahrzeugseitig montierte Lademodul zur weiteren Nutzung übertragen. Zur Wirkungsgradsteigerung ist es notwendig, dass das Lademodul und der Transmitter möglichst nah zueinander liegen. Daher ist eine tiefe Positionierung des (plattenförmigen) Lademoduls am Kraftfahrzeug anzustreben. Die Versteifungsstruktur kann wahlweise als schubsteife Platte oder als, vorzugsweise kreuzartig aufgebauter, Strebenverbund (sog. Strebenkreuz) ausgebildet sein. Durch die schubsteife Platte kann lediglich die Steifigkeit des Hilfsrahmens erhöht werden, während der Strebenverbund zusätzlich noch in der Lage ist Kräfte aufzunehmen. Die Längsträger des Hilfsrahmens sind vorzugsweise spiegelsymmetrisch angeordnet und können entweder unmittelbar oder mittelbar, beispielsweise über einen Gussknoten, mit dem mindestens einen Querträger zu einer offenen bzw. geschlossenen Rahmenkonstruktion verbunden werden.

In einer bevorzugten Ausführung sind die Entkopplungslager als Gummi-Metall-Hülsenlager ausgebildet. Die stabile Metallaußenhülse sorgt für einen festen Sitz in der Versteifungsstruktur oder dem Lademodul, während die Innenhülse zur Aufnahme eines Verbindungselements durch eine elastische Zwischenschicht schwingungsentkoppelt ist.

In einer bevorzugten Ausführung weist das Lademodul ein Abschirmblech und eine Spuleneinheit auf, wobei die Spuleneinheit in Einbaulage geodätisch unterhalb des Abschirmblechs angeordnet ist. Zur besseren Funktion der Spuleneinheit ist eine Abschirmung gegenüber umliegenden ferro-magnetischen Bauteilen (beispielsweise Längsträger, Querträger und Versteifungsstruktur) notwendig. Zu diesem Zweck wird die Spuleneinheit von einem vorzugsweise aus Aluminium bestehenden Abschirmblech teilweise eingefasst und zwar so, dass das Abschirmblech sich zwischen den ferro-magnetischen Bauteilen und der Spuleneinheit befindet. Die Spuleneinheit wird während des Betriebs von einem magnetischen Wechselfeld des (geostationären) Transmitters zumindest teilweise durchdrungen, wodurch eine Spannung induziert wird. Eine geeignete Leistungselektronik wandelt diese Spannung und gibt sie an das Bordnetz des Kraftfahrzeugs weiter.

In einer bevorzugten Ausführung ist das Abschirmblech über die Entkopplungslager mit der Versteifungsstruktur verbunden. Das Abschirmblech ist vergleichsweise stabil und kann somit das Lademodul als solches am besten an der Versteifungsstruktur halten.

In einer bevorzugten Ausführung sind die Entkopplungslager mit der Versteifungsstruktur zusammengefügt und halten über Verbindungselemente das Lademodul. Als Verbindungselemente kommen beispielsweise Schraube-Gewinde-Kombinationen in Frage. Die Versteifungsstruktur hält die Entkopplungslager vorzugsweise durch einen Presssitz.

In einer bevorzugten Ausführung sind die Entkopplungslager in entsprechende Aufnahmen der Versteifungsstruktur eingepresst. Die Aufnahmen sind besonders bevorzugt als stoffschlüssig in der Versteifungsstruktur befestigte Metallhülsen ausgebildet, in welche die Entkopplungslager eingepresst werden.

In einer bevorzugten Ausführung sind die Entkopplungslager mit dem Lademodul zusammengefügt und halten sich über Verbindungselemente an der Versteifungsstruktur. Als Verbindungselemente kommen beispielsweise Schraube-Gewinde-Kombinationen in Frage. Das Lademodul hält die Entkopplungslager vorzugsweise durch einen Presssitz.

Bei einem Kraftfahrzeug mit einem erfindungsgemäßen Hilfsrahmen ist das Lademodul mit einem elektrischen Energiespeicher verbunden. In einer bevorzugten Ausführung ist der Energiespeicher als Traktionsbatterie ausgebildet. Wird das Kraftfahrzeug nun über einen geostationären, fahrbahnseitigen Transmitter bewegt, so empfängt die Spuleneinheit des Lademoduls in der Versteifungsstruktur des Hilfsrahmens das vom Transmitter ausgesendete magnetische Wechselfeld und eine Spannung wird induziert. Die Spannung gibt die Leistungselektronik an die Traktionsbatterie weiter, die dadurch geladen wird. Zur Fortbewegung des Kraftfahrzeugs kann die Spannung später wieder aus der Traktionsbatterie entnommen werden, um eine E-Maschine anzutreiben.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
Fig. 1 eine seitliche Schnittansicht einer ersten Ausführungsform des Hilfsrahmens;
Fig. 2 eine weitere seitliche Schnittansicht der ersten Ausführungsform des Hilfsrahmens;
Fig. 3 eine Schnittansicht durch ein Entkopplungslager der ersten Ausführungsform des Hilfsrahmens;
Fig. 4 eine Schnittansicht durch ein Entkopplungslager einer zweiten Ausführungsform des Hilfsrahmens.

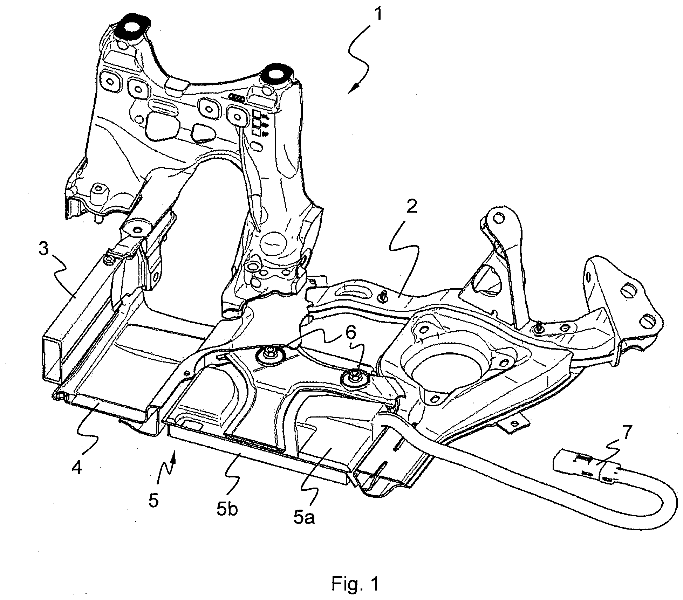

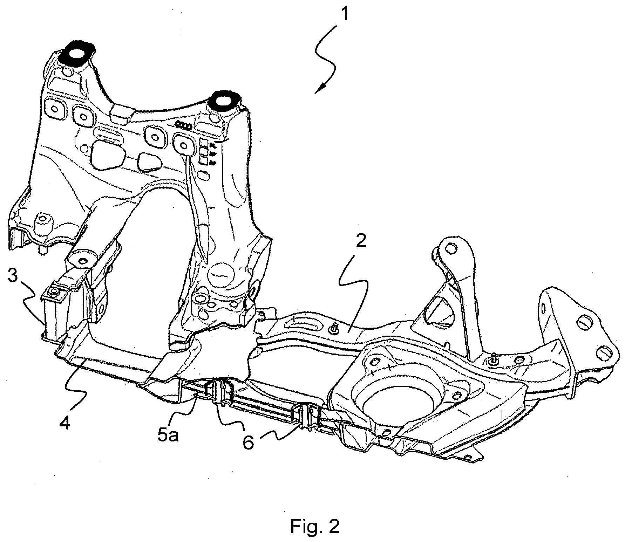

Gemäß der Figuren 1 und 2 besteht ein Hilfsrahmen 1 für den Vorderwagen eines Kraftfahrzeugs aus zwei bezüglich der Fahrzeuglängsachse spiegelsymmetrisch angeordneten und voneinander beabstandeten Längsträgern 2 (in der vorliegenden Schnittansicht ist nur einer gezeigt), die durch einen Querträger 3 miteinander verbunden sind. An dem so gebildeten Hilfsrahmen 1 wird eine vorliegend als Strebenkreuz ausgebildete Versteifungsstruktur 4 zur Erhöhung der Torsionssteifigkeit angeordnet. Die Versteifungsstruktur 4 weist in ihrem Zentrum Freiflächen auf. Dort wird ein Lademodul 5 eingesetzt, welches aus einem Abschirmblech 5a und einer Spuleneinheit 5b besteht. Das Abschirmblech 5a überdeckt die Spuleneinheit 5b im eingebauten Zustand nach oben hin. Das Abschirmblech 5a, das vorzugsweise aus Aluminium besteht, ist an dessen Rändern mit Entkopplungslagern 6 verschraubt, die ihrerseits in der Versteifungsstruktur 4 fest gehalten sind. Die Entkopplungslager 6 entkoppeln das Lademodul 5 von den Verformungen der Versteifungsplatte 4 im Fahrbetrieb. Die Entkopplungslager 6 sind als Gummi-Metall-Hülsenlager ausgeführt und formschlüssig in entsprechende hülsenförmige Aufnahmen der Versteifungsstruktur 4 eingepresst. Ein Stecker 7 führt von der Spuleneinheit 5b zu einer fahrzeugseitigen Energiespeichereinrichtung (nicht dargestellt).

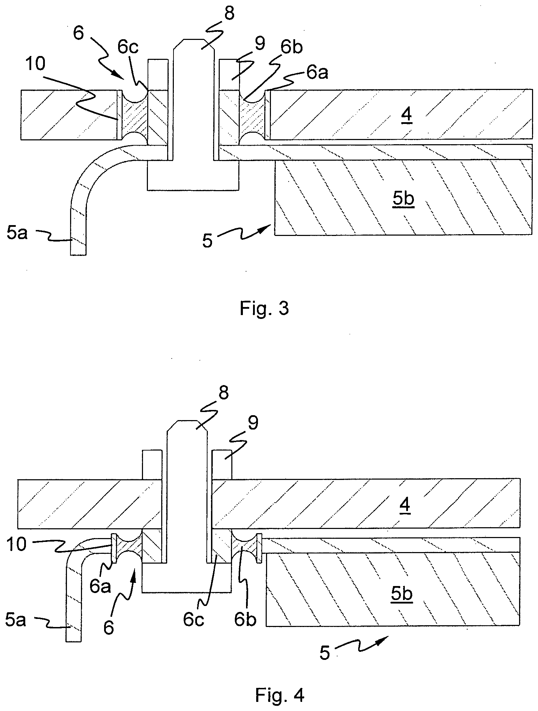

Die Figur 3 zeigt ein Entkopplungslager 6 nach der in den Figuren 1 und 2 dargestellten ersten Ausführungsform als ein Gummi-Metall-Hülsenlager mit einer Außenhülse 6a, die in eine Aufnahme 10 der Versteifungsstruktur 4 eingepresst ist. Mittels einer rundum laufenden Elastomerschicht 6b ist eine Innenhülse 6c elastisch an der Außenhülse 6a gehalten, wobei die Innenhülse 6c ferner eine Mutter 9 aufweist. Die Mutter 9 hat ein Innengewinde, das mit einem Außengewinde eines als Schraube ausgebildeten Verbindungselements 8 zusammenwirken kann. Über das Verbindungselement 8 wird das Abschirmblech 5a des Lademoduls 5 gehalten, welches wiederum die Spuleneinheit 5b hält.

Die Figur 4 zeigt ein Entkopplungslager 6 nach einer zweiten Ausführungsform, das analog in einem Hilfsrahmen der Figuren 1 und 2 verwendet werden kann. Das Entkopplungslager 6 ist ein Gummi-Metall-Hülsenlager mit einer Außenhülse 6a, die in eine Aufnahme 10 des Abschirmblechs 5a des Lademoduls 5 eingepresst ist. Mittels einer rundum laufenden Elastomerschicht 6b ist eine Innenhülse 6c elastisch an der Außenhülse 6a gehalten. Die Versteifungsstruktur 4 trägt eine Mutter 9 mit einem Innengewinde. Ein als Schraube ausgebildetes Verbindungselement 8 hat ein Außengewinde, das mit dem Innengewinde der Mutter 9 zusammenwirken kann. Somit wird über das Entkopplungslager 6 das Abschirmblech 5a an der Versteifungsstruktur 4 elastisch entkoppelt befestigt, wobei das Abschirmblech 5a wiederum die Spuleneinheit 5b hält.

### Liste der Bezugszeichen:

- 1: Hilfsrahmen
- 2: Längsträger
- 3: Querträger
- 4: Versteifungsstruktur
- 5: Lademodul
- 5a: Abschirmblech
- 5b: Spuleneinheit
- 6: Entkopplungslager
- 6a: Außenhülse
- 6b: Elastomerschicht
- 6c: Innenhülse
- 7: Stecker
- 8: Verbindungselement
- 9: Mutter
- 10: Aufnahme

## Patentansprüche

1. Hilfsrahmen (1) eines Vorder- oder Hinterwagens eines Kraftfahrzeugs mit zwei Längsträgern (2), die in Fahrzeugquerrichtung voneinander beabstandet und über wenigstens einen Querträger (3) miteinander verbunden sind, wobei der Hilfsrahmen (1) eine Versteifungsstruktur (4) zur Erhöhung der Torsionssteifigkeit aufweist, in die ein Lademodul (5) zur kontaktlosen Energieübertragung integriert ist, **dadurch gekennzeichnet, dass** das Lademodul (5) mit der Versteifungsstruktur (4) ausschließlich über Entkopplungslager (6) verbunden ist.

2. Hilfsrahmen (1) nach Anspruch 1, **dadurch gekennzeichnet, dass** die Entkopplungslager (6) als Gummi-Metall-Hülsenlager ausgebildet sind.

3. Hilfsrahmen (1) nach Anspruch 1 oder 2, **dadurch gekennzeichnet, dass** das Lademodul (5) ein Abschirmblech (5a) und eine Spuleneinheit (5b) aufweist, wobei die Spuleneinheit (5b) in Einbaulage geodätisch unterhalb des Abschirmblechs (5a) angeordnet ist.

4. Hilfsrahmen (1) nach Anspruch 3, **dadurch gekennzeichnet, dass** das Abschirmblech (5a) über die Entkopplungslager (6) mit der Versteifungsstruktur (4) verbunden ist.

5. Hilfsrahmen (1) nach einem der Ansprüche 1 bis 4, **dadurch gekennzeichnet, dass** die Entkopplungslager (6) mit der Versteifungsstruktur (4) zusammengefügt sind und über Verbindungselemente (8) das Lademodul (5) halten.

6. Hilfsrahmen (1) nach Anspruch 5, **dadurch gekennzeichnet, dass** die Entkopplungslager (6) in entsprechende Aufnahmen (10) der Versteifungsstruktur (4) eingepresst sind.

7. Hilfsrahmen (1) nach einem der Ansprüche 1 bis 4, **dadurch gekennzeichnet, dass** die Entkopplungslager (6) mit dem Lademodul (5) zusammengefügt sind und sich über Verbindungselemente (8) an der Versteifungsstruktur (4) halten.

## Claims

1. Subframe (1) of a front or rear end of a motor vehicle comprising two side members (2) which are spaced apart from one another in the transverse direction of the vehicle and are connected to one another via at least one cross member (3), the subframe (1) having a stiffening structure (4) for increasing torsional stiffness, into which stiffening structure a charging module (5) for contactless energy transfer is incorporated, **characterised in that** the charging module (5) is connected to the stiffening structure (4) exclusively via decoupling bearings (6).

2. Subframe (1) according to claim 1, **characterised in that** the decoupling bearings (6) are designed as rubber-metal sleeve bearings.

3. Subframe (1) according to claim 1 or 2, **characterised in that** the charging module (5) has a shielding plate (5a) and a coil unit (5b), wherein, in an installed state, the coil unit (5b) is geodetically arranged below the shielding plate (5a).

4. Subframe (1) according to claim 3, **characterised in that** the shielding plate (5a) is connected to the stiffening structure (4) via the decoupling bearings (6).

5. Subframe (1) according to any of claims 1 to 4, **characterised in that** the decoupling bearings (6) are joined with the stiffening structure (4) and hold the charging module (5) via connecting elements (8).

6. Subframe (1) according to claim 5, **characterised in that** the decoupling bearings (6) are pressed into corresponding receptacles (10) of the stiffening structure (4).

7. Subframe (1) according to any of claims 1 to 4, **characterised in that** the decoupling bearings (6) are joined with the charging module (5) and are held on the stiffening structure (4) via connecting elements (8).

## Revendications

1. Faux-châssis (1) d'un essieu avant ou arrière d'un véhicule automobile avec deux poutres longitudinales (2), qui sont distantes l'une de l'autre dans la direction transversale de véhicule et qui sont reliées l'une à l'autre par l'intermédiaire d'au moins une poutre transversale (3), lequel faux-châssis (1) présente une structure de renfort (4) qui est destinée à augmenter la rigidité en torsion et dans laquelle un module de charge (5) est intégré en vue du transfert d'énergie sans contact, **caractérisé en ce que** le module de charge (5) est relié à la structure de renfort (4) exclusivement par l'intermédiaire de supports de découplage (6).

2. Faux-châssis (1) selon la revendication 1, **caractérisé en ce que** les supports de découplage (6) sont réalisés sous forme de supports à manchons caoutchouc-métal.

3. Faux-châssis (1) selon la revendication 1 ou 2, **caractérisé en ce que** le module de charge (5) comporte une tôle de protection (5a) et une unité de bobine (5b), l'unité de bobine (5b) étant agencée, dans la position montée, en dessous de la tôle de protection (5a) dans le système géodésique.

4. Faux-châssis (1) selon la revendication 3, **caractérisé en ce que** la tôle de protection (5a) est reliée à la structure de renfort (4) par l'intermédiaire des supports de découplage (6).

5. Faux-châssis (1) selon l'une quelconque des revendications 1 à 4, **caractérisé en ce que** les supports de découplage (6) sont assemblés à la structure de renfort (4) et maintiennent le module de charge (5) par l'intermédiaire d'éléments de liaison (8).

6. Faux-châssis (1) selon la revendication 5, **caractérisé en ce que** les supports de découplage (6) sont enfoncés dans des logements correspondants (10) de la structure de renfort (4).

7. Faux-châssis (1) selon l'une quelconque des revendications 1 à 4, **caractérisé en ce que** les supports de découplage (6) sont assemblés au module de charge (5) et se maintiennent au niveau de la structure de renfort (4) par l'intermédiaire d'élément de liaison (8).
